Europäisches Patentamt

European Patent Office

Office européen des brevets

(19)

(11) Publication number: **0 457 922 A1**

## EUROPEAN PATENT APPLICATION
## published in accordance with Art.
## 158(3) EPC

(12)

(21) Application number: 91900377.2

(22) Date of filing: 11.12.90

(86) International application number:
PCT/JP90/01613

(87) International publication number:
WO 91/09362 (27.06.91 91/14)

(51) Int. Cl.⁵: **G06F 3/033, G06K 11/18**

(30) Priority: 13.12.89 JP 324328/89
02.11.90 JP 295372/90

(43) Date of publication of application:
27.11.91 Bulletin 91/48

(84) Designated Contracting States:
**DE FR GB IT**

(71) Applicant: **KABUSHIKI KAISHA WACOM**
**5-23-4, Sakurada Washimiyamachi**
**Kitakatsusika-gun, Saitama-ken(JP)**

(72) Inventor: **MURAKAMI, Azuma Kabushikikaisha**
**Wacom**
**23-4, Sakurada 5-chome Washimiyamachi**
**Kitakatsushika-gun Saitama-ken 340-02(JP)**
Inventor: **MORII, Hiroki Kabushikikaisha**
**Wacom**
**23-4, Sakurada 5-chome Washimiyamachi**
**Kitakatsushika-gun Saitama-ken 340-02(JP)**

(74) Representative: **TER MEER - MÜLLER -**
**STEINMEISTER & PARTNER**
**Artur-Ladebeck-Strasse 51**
**W-4800 Bielefeld 1(DE)**

(54) **PULSE COUNT TYPE COMMUNICATION SYSTEM.**

(57) A pulse count type communication system in which the RS-232C interface is unnecessitated unlike before and the multi-terminal processing capability of a host computer can be utilized effectively as a whole since coordinate data can be transferred to the host computer via a bus-mouse interface. In the communication system, a transmission part has two pulse circuits each of which outputs a two-phase pulse train including the pulse edges whose number corresponds to an integer represented by a binary-bit train constituting data to be transferred. This transmission part transmits e.g. the coordinate data inputted through a digitizer. A reception part has two counters each of which counts the pulse edges included in the two-phase pulse train, and a reading circuit which defines the number of the counted pulse edges. The counters and the reading circuit are made up of bus-mouse interfaces.

EP 0 457 922 A1

FIG. 1

TECHNICAL FIELD

The present invention generally relates to a communication system for transferring data composed of binary parallel bits from a transmitter to a receiver, and specifically relates to the system for transferring input data from a peripheral terminal device to a host computer to process the data. More particularly, the present invention relates to the communication system for transferring coordinate value data outputted from a digitizer operative to effect two-dimensional coordinate designation to a host computer through an interface provided in the host computer.

BACKGROUND TECHNOLOGY

There has been known a conventional data communication system called an asynchronous system of start-stop synchronization mode, effective to once convert bit parallel data into bit serial data and to then transfer the serial data from a transmitter to a receiver.

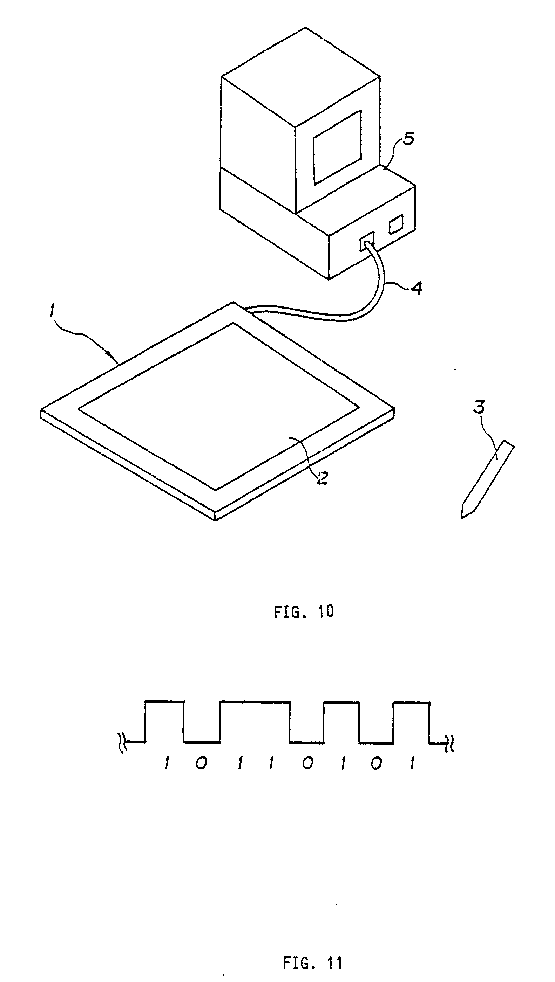

This system is described briefly with respect to an example in which data is transferred from a digitizer to a host computer. Fig. 10 is an overall perspective view showing the communication system including a digitizer and a host computer. The digitizer 1 is comprised of a tablet planar sensor 2 which defines a two-dimensional coordinate plane. A suitable input tool such as a stylus pen 3 is used to designate a given point on a surface of the tablet planar sensor 2 so that the sensor 2 generates an analog detection signal indicative of the designated point. The digitizer 1 further includes a processing circuit unit operative to calculate a data representative of a two-dimensional coordinate value of the designated point according to the analog detection signal. The calculated data is fed to the host computer 5 through a signal cable 4. The host computer 5 is provided with a plurality of different type interfaces for connection with peripheral input and output terminal devices. The interfaces are selected according to a form of the signal to be transferred.

Fig. 11 shows a waveform of an output signal transmitted from the digitizer. For example, the digitizer generates a coordinate value data in the form of an eight-bit parallel data. This eight-bit parallel data is subjected to parallel/sirial conversion to produce an eight-bit serial data signal as shown in Fig. 11. For example, an eight-bit parallel data of (10110101) is converted into a corresponding eight-bit serial data signal of 1-0-1-1-0-1-0-1. Such mode of the bit data transmission is called the asynchronous system of start-stop synchronization mode as noted before. In order to receive a data signal formed according to the asynchronous system of start-stop synchronization mode, the host computer is typically provided with a particular interface based on RS-232C standard. Therefore, a peripheral terminal device is generally connected to the host computer through the RS-232C interface.

This RS-232C interface of the host computer is of general purpose and therefore is normally shared by various kinds of peripheral terminal devices adopted to execute data transfer or transaction according to the asynchronous system of start-stop synchronization mode. However, the RS-232C interface can accept a limited number of peripheral terminal devices to be concurrently accessed by the host computer. Therefore, there has been desired a different communication mode effective to execute data transfer or transaction through other interfaces of the host computer than the RS-232C interface.

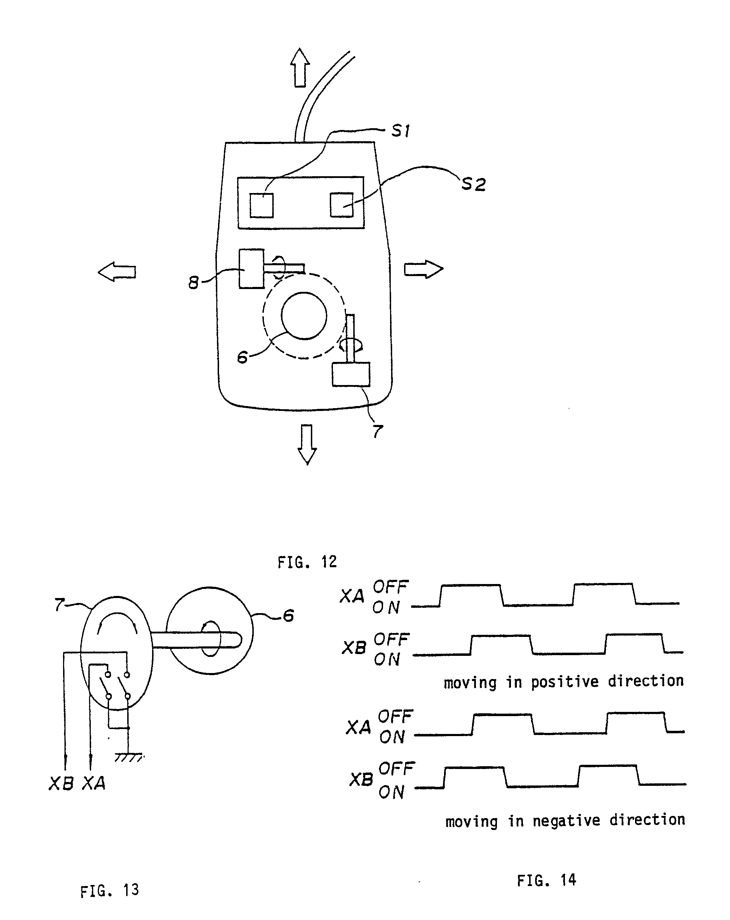

For example, the typical host computer is provided with a bus mouse interface which is designed to specifically connect to a bus mouse device. The brief description is given herewith for the bus mouse for facilitating understanding of the present invention. The bus mouse is generally utilized as a coordinate input terminal device for a computer. However, the bus mouse can treat only a relative displacement value. Further, since the bus mouse has an overall size considerably greater than a stylus pen used as an input tool of the digitizer, the bus mouse cannot carry out character input and menu selection. On the other hand, the digitizer can treat the absolute coordinate value and can effect character input. Since the bus mouse has a relatively low price and it can utilize a relatively simple interface construction, the recent computers are generally connectable with a standard bus mouse. Fig. 12 shows a schematic construction of a typical bus mouse device. The bus mouse is manually moved to input its own displacement amount during the movement into a host computer. The bus mouse is provided on its bottom portion with a ball member 6 to enable the movement of the body of the bus mouse. A pair of sensors 7 and 8 are disposed in contact with the ball member 6 to detect separately X-axis and Y-axis components of the displacement amount.

Fig. 13 shows the operation of the bus mouse sensors. For example, the X-axis sensor 7 has a rotary shaft placed in contact with the ball member 6. Although not shown in the figure, the other Y-axis sensor 8 has another rotary shaft disposed orthogonally to the rotary shaft of the X-axis sensor 7, in contact with the ball member 6. When the ball member 6 undergoes rolling due to the displacement of the bus mouse, the rotary shaft of the X-axis sensor 7 is rotated according to the X-axis component of the displacement to produce an output signal XA and XB. Concurrently, the bus mouse outputs a switching signal S1 and S2

3

indicative of operating state or condition of the bus mouse.

Fig. 14 shows a waveform of the bus mouse output signal. As shown in the figure, the output signal is composed of two pulse trains. When the bus mouse is displaced in the plus or positive direction in terms of X-axis, the one pulse train XA is in an advancing phase with respect to the other pulse train XB. On the other hand, when the bus mouse is displaced in the minus or negative direction in terms of X-axis, the one pule train XA is in a delaying phase with respect to the other pulse train XB. By such operation, the displacement amount of the bus mouse per a unit time is detected in terms of a number of pulse edges per the unit time contained in the output signal, and the displacement direction is indicated by the relative phase condition of the output signal.

The typical host computer is provided with a bus mouse interface for admitting the output signal and the switching signal from a bus mouse device. The bus mouse interface contains a pair of 8-bit counters corresponding to the X coordinate and Y coordinate, respectively, for counting pulse edges of the X and Y output signals. These calculation results are retrieved from the respective 8-bit counters each period of a given interval of, e.g., 8 ms regulated by means of an internal timer in the host computer so as to detect the displacement amount of the bus mouse and the switch condition of the bus mouse every period.

As shown in Fig. 11, the conventional digitizer produces an output signal composed of a binary bit series according to the asynchronous system of start-stop synchronization mode. On the other hand, as shown in Fig. 14, the bus mouse device produces an output signal composed of a two-phase pulse train, therefore, the conventional digitizer has a different output signal form than that of the bus mouse device, hence the digitizer cannot be directly connected to the bus mouse interface of the host computer.

As understood from the above description, the binary bit serial data cannot be inputted into the bus mouse interface of the host computer, if based on the asynchronous system of start-stop synchronization mode. However, the bus mouse interface is so specialized and therefore is not so frequently occupied as compared to the general RS-232C interface. Thus, it has been desired in the commercial use to carry out the data transfer or transaction with using a channel of the bus mouse interface. However, the conventional data communication system could not satisfy such demand in the market.

In view of the above noted drawbacks of the conventional data communication system, an object of the present invention is to provide a new communication system effective to transfer parallel bit data from a transmitter such as a peripheral terminal device to a receiver such as a host computer through a bus mouse interface provided in the host computer.

DISCLOSURE OF THE INVENTION

In the inventive communication system for transferring serial data of binary bits from a transmitter to a receiver, the transmitter is provided with a pulse circuit which operates each transfer period of a given interval to output a two-phase pulse train containing a certain number of pulse edges according to an integer value represented by the binary bits to be transferred. This transmitter transmits, for example, two-dimensional coordinate value data inputted from a digitizer. On the other hand, the receiver is provided with a counting circuit for counting a number of pulse edges contained in the two-phase pulse train, and a retrieving circuit operative each transfer period for intermittently retrieving and resetting a content of the counting circuit at a given sampling interval and being operative when the newest retrieved content becomes null for summing up all of the successively retrieved contents to thereby determine the number of received pulse edges within each transfer period. These counting circuit and retrieving circuit constitute a bus mouse interface in the receiver.

According to the inventive pulse count mode communication system, the data is transferred to the host computer through the bus mouse interface instead of the RS-232C interface in contrast to the prior art. Therefore, multiplex terminal processing capacity of the host computer can be efficiently utilized to a greater extent, and the specialized bus mouse interface can be extensively utilized as compared to the prior art.

In a preferred form, the transmitter includes a coding circuit for applying to each data either of a plus or minus code effective to discriminate a sequence of plural data form each other. The pulse circuit operates according to the applied code to switch a phase condition of the two-phase pulse train. On the other hand, the receiver operates according to the phase switching of the two-phase pulse train to discriminate from each other the time-sequentially transferred plural data. The coding circuit applies, for example, the plus and minus codes alternately to the sequence of the plural data. Otherwise, the coding circuit applies one code to a top data of the sequential data set, and applies the other code to the remaining subsequent data. By such coding, data transaction error can be effectively avoided.

In another preferred form, the transmitter includes a pair of the pulse circuits for concurrently transmitting a pair of data, and the receiver includes a pair of corresponding counting circuits for concurrently receiving the pair of data. The pair of pulse circuits operate, for example, to transmit a packet of four data each transaction process by outputting a pair of data at a first transfer period and outputting another pair of data at a second transfer period, thereby improving data transaction rate.

In a further preferred form, the receiver includes a selecting circuit operative to select either of an absolute coordinate data and a relative coordinate data obtained from a coordinate input device such as a digitizer in order to selectively transfer either of the absolute and relative data. When the relative coordinate data is selected, the retrieving circuit of the receiver operates each retrieving period set shorter than the data transfer period for detecting each relative coordinate data which is fed every transfer period from the transmitter. The relative coordinate data is applied with either of positive and negative signs by the coding circuit, and thereafter is transmitted in the form of a two-phase pulse train by the pulse circuit in manner similar to the transfer of the bus mouse displacement data. According to the inventive communication system, a coordinate input device can selectively or switchably transfer either of the absolute or relative coordinate data to a host computer through the bus mouse interface without using the serial RS-232C interface as opposed to the prior art. Therefore, the serial interface of the general purpose can be assigned to other peripheral devices according to their priority. The bus mouse interface conventionally kept specific to the bus mouse device can be efficiently utilized as a common interface for the coordinate input device. In addition, the host computer can operate an application program designed for the conventional bus mouse.

BRIEF DESCRIPTION OF THE DRAWINGS

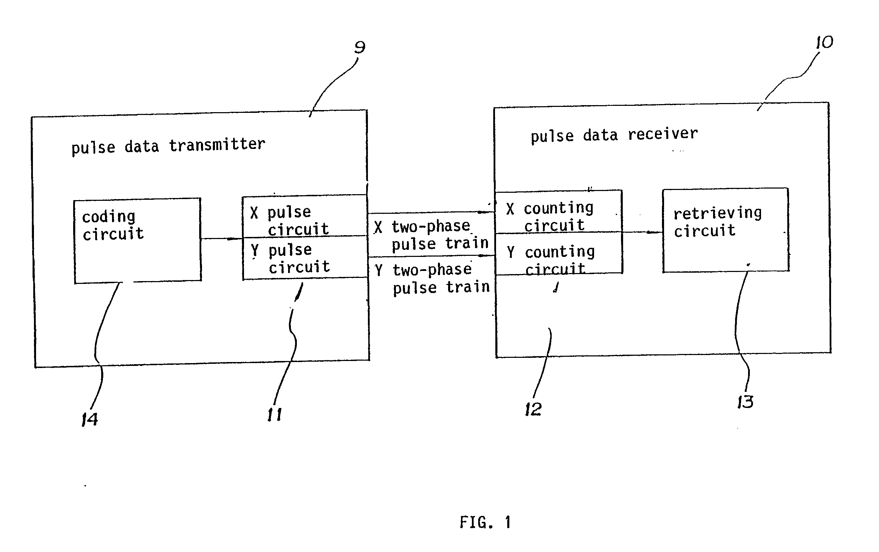

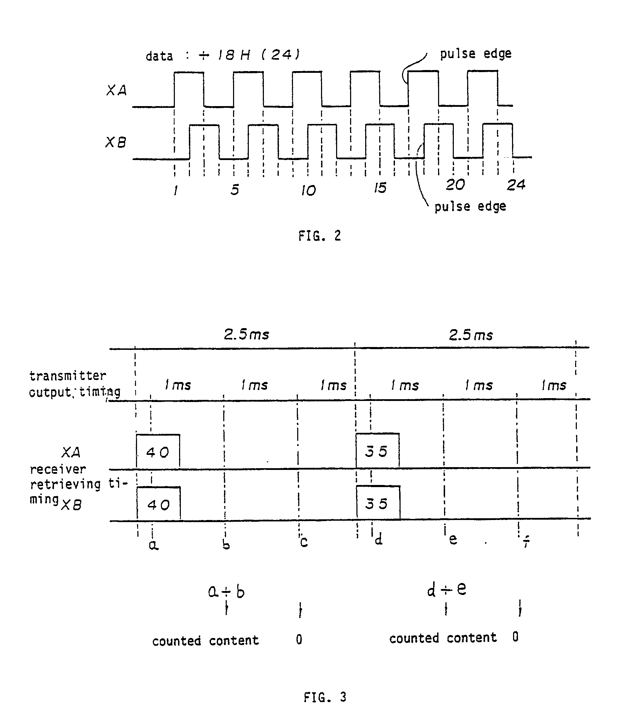

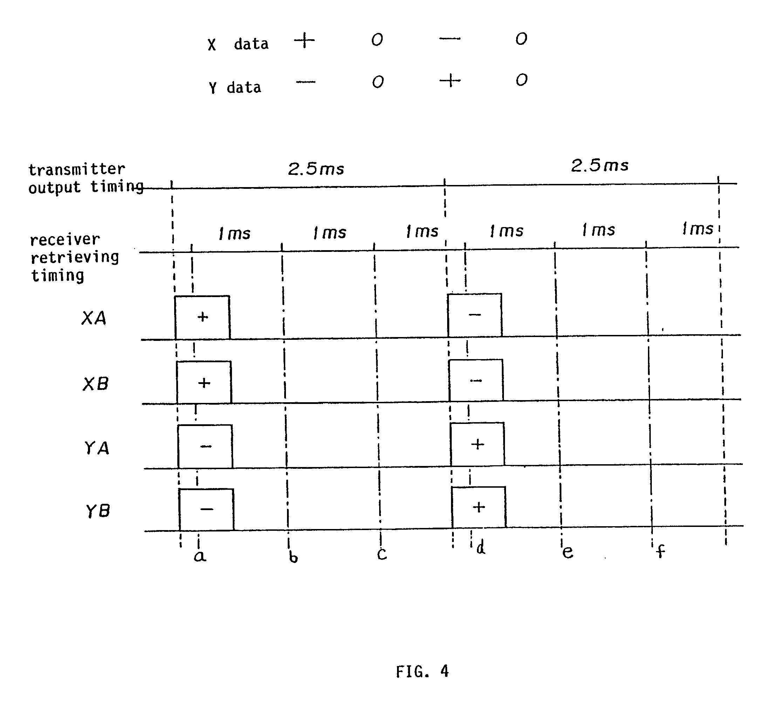

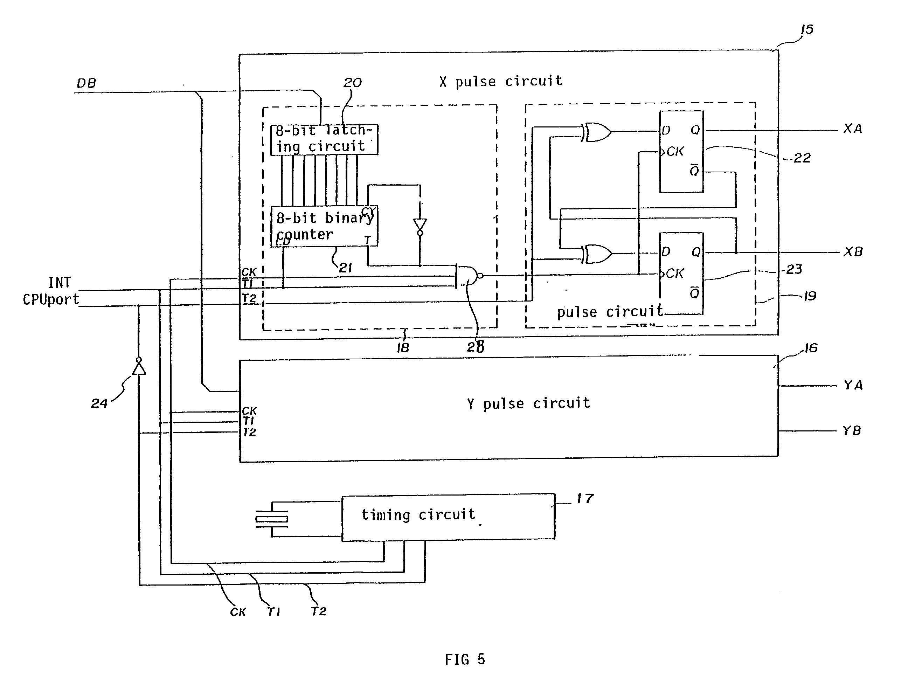

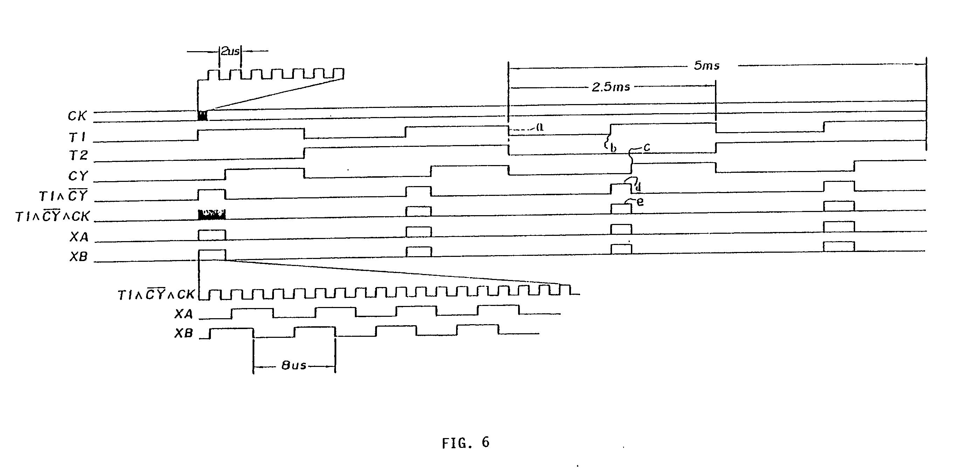

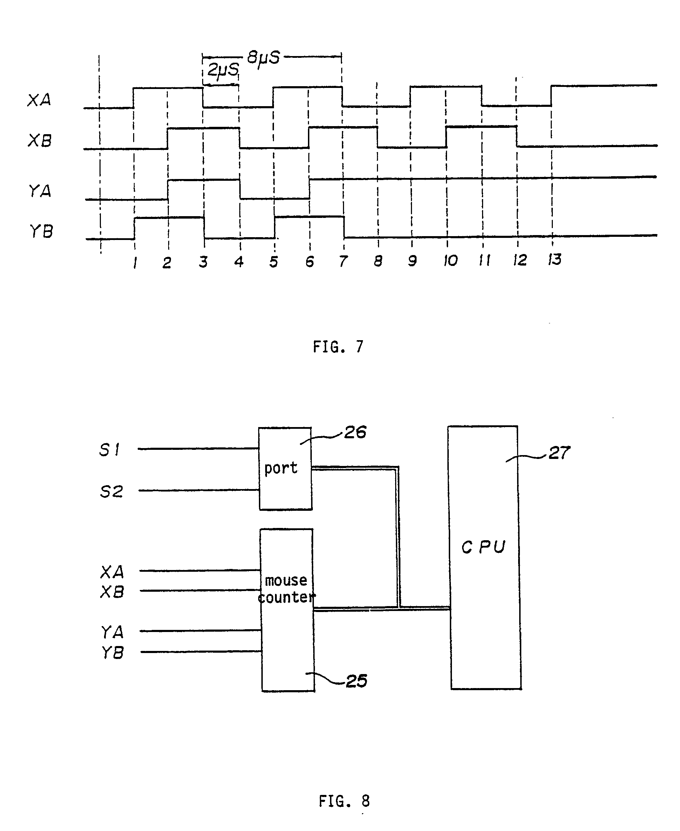

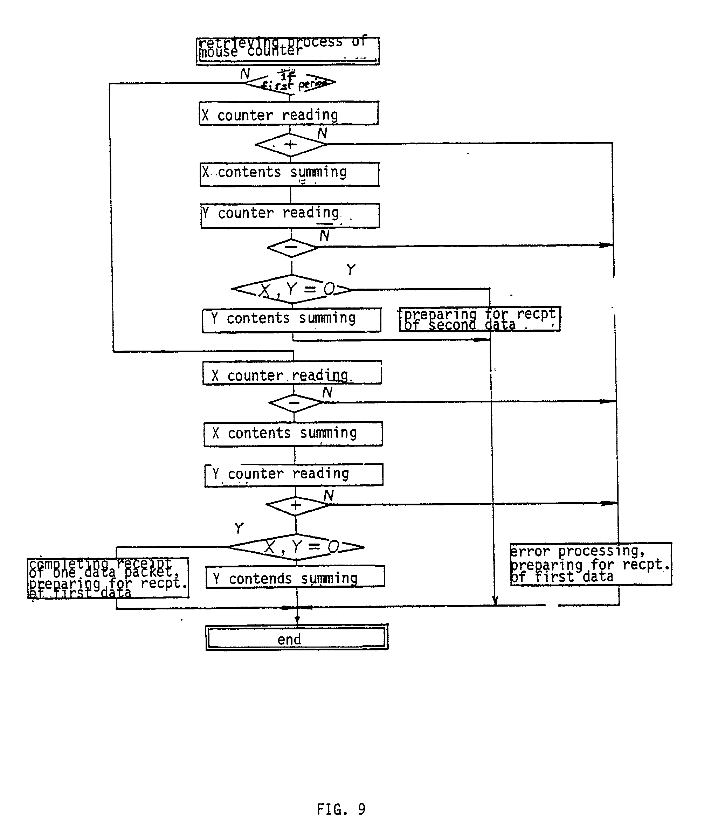

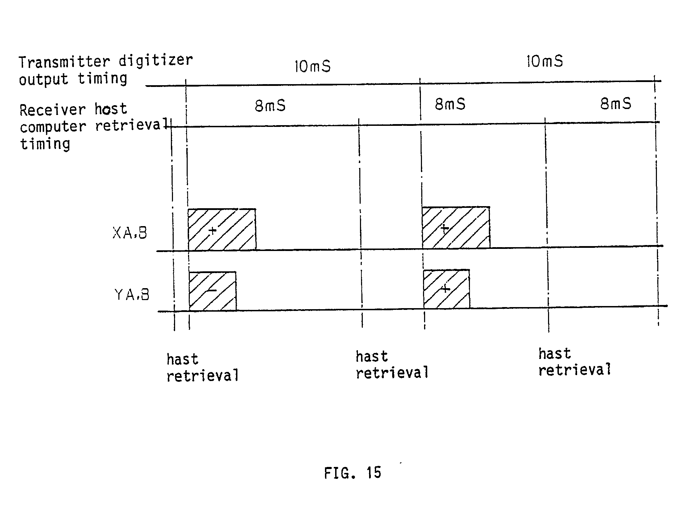

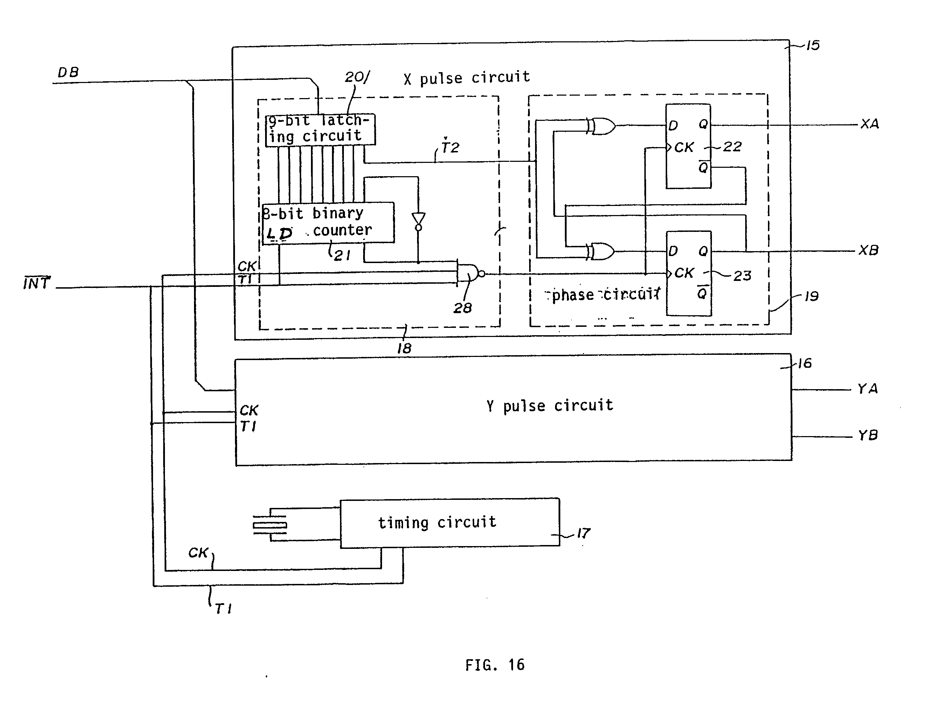

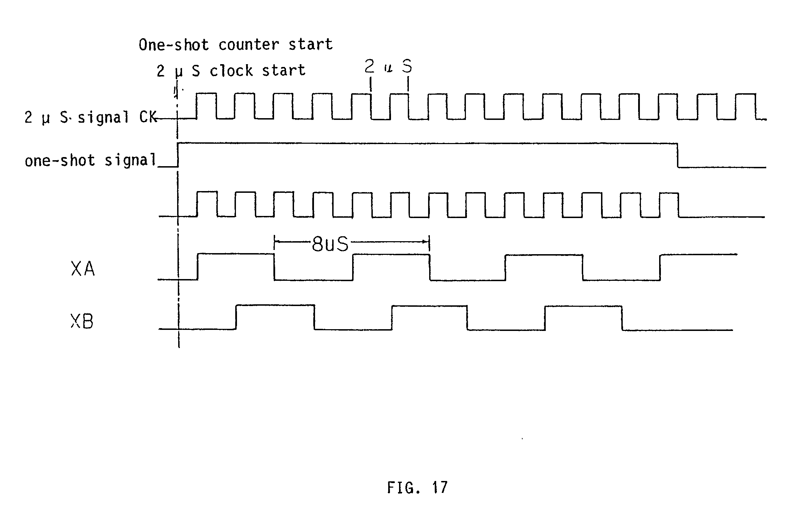

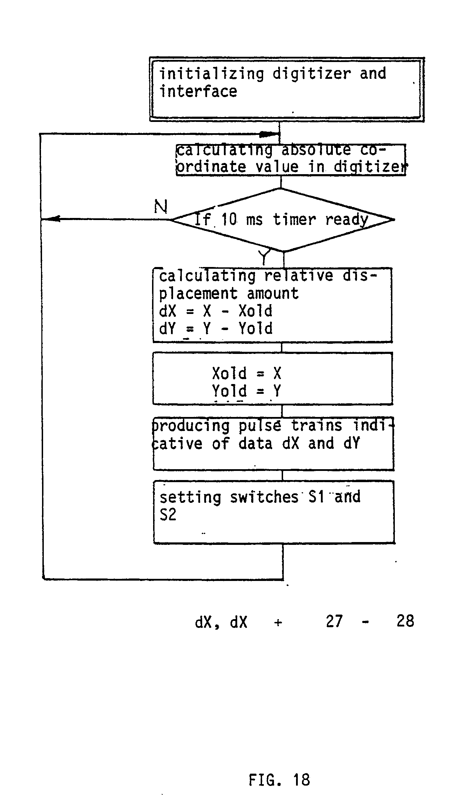

Fig. 1 is an overall structural diagram of the inventive pulse count mode communication system; Fig. 2 is a waveform diagram of a two-phase pulse train; Fig. 3 is a data transaction timing chart; Fig. 4 is another data transaction timing chart; Fig. 5 is a detailed circuit diagram of a transmitter; Fig. 6 is a timing chart illustrative of the transmission operation; Fig. 7 is a waveform diagram of an X two-phase pulse train and a Y two-phase pulse train; Fig. 8 is a block diagram of the receiver; Fig. 9 is a flow chart showing retrieving operation of the receiver; Fig. 10 is a schematic perspective view of the conventional communication system; Fig. 11 is a waveform diagram showing a transfer signal according to the conventional data transaction mode; Fig. 12 is a schematic structural diagram of the typical bus mouse; Fig. 13 is an illustrative diagram showing the operation of a bus mouse sensor; Fig. 14 is a waveform diagram of a bus mouse output signal; Fig. 15 is a transfer timing chart of the relative coordinate dada; Fig. 16 is a detailed circuit diagram showing another embodiment of the transmitter; Fig. 17 is a timing chart showing operation of a further embodiment of the transmitter; and Fig. 18 is a flow chart of the displacement data transmission process in the transmitter.

THE BEST MODES FOR PRACTICING THE INVENTION

Fig. 1 is a block diagram showing an overall structure of the pulse edge count mode communication system according to the invention. The communication system is comprised of a pulse data transmitter 9 and a pulse data receiver 10. The transmitter 9 is provided with a pulse circuit 11 operative every transfer period of a given interval to output a two-phase pulse train containing a certain number of pulse edges corresponding to an integer value represented by serial binary bits which form a data to be transferred.

On the other hand, the receiver 10 is provided with a resettable counting circuit 12 for counting successive pulse edges contained in the two-phase pulse train, and a retrieving circuit 13 operative each sampling timing within one transfer period for successively retrieving and resetting a content of the counting circuit 12 and being operative when the newest retrieved content becomes null for summing up all of the retrieved contents to determine the number of pulse edges admitted in the receiver. Namely, the counting circuit 12 and the retrieving circuit 13 constitute a bus mouse interface in the pulse data receiver 10.

Preferably, the transmitter 9 includes a coding circuit 14 for applying to each of a plurality of sequential data either of plus or minus code in order to discriminate the plural data from each other. The pulse circuit 11 operates according to the applied code to select a phase condition of the two-phase pulse train. In addition, the pulse data receiver 10 operates according to the phase condition to discriminate each other the plurality of data transferred time-sequentially. The coding circuit 14 operates, for example, to apply alternately the positive and negative codes to a sequence of the plural data to discriminate preceding and succeeding ones from each other. Otherwise, the coding circuit 14 may apply one code to a top of the sequential data and may apply another code to the remaining subsequent data so that the receiver can detect a transmission start timing of a packet transaction of multiple data.

In a preferred form, the pulse circuit 11 is comprised of a pair of X pulse circuit and Y pulse circuit so as to transmit a pair of data concurrently. Correspondingly, the counting circuit 12 is comprised of a pair of X counting circuit and Y counting circuit so as to concurrently receive the pair of data. Moreover, the pair of X and Y pulse circuits operate in a first transfer period to transmit a pair of data and operate in a second transfer period to transmit another pair of data to effect transaction of a packet of four data by one transaction processing. Such communication mode is most suitable for transferring a packet of data indicative of a coordinate point inputted from a digitizer.

The description is hereinbelow given for the operation of inventive communication system utilizing a bus mouse interface in case of transaction of a packet of four data at one step of transaction processing. The transmitter outputs each data in the form of a two-phase pulse train. On the other hand, the receiver such as a host computer is provided with a bus mouse interface having the following functions:

1. Function to count a number of pulse edges contained in the two-phase pulse train;

2. Function to detect whether a phase condition of the two-phase pulse train is of advancing or delaying to recognize plus or minus of the data; and

3. Function to count concurrently pulse edges contained in a pair of two-phase pulse trains.

The above listed three functions are executed by a specific hardware, i.e., a mouse counter provided in the receiver. The receiver can convert the received two-phase pulse train into an 8-bit binary complement representation of a decimal data "-128" through "+127". The transmitter transmits each data in the form of the two-phase pulse train to the receiver with using the above noted three functions of the receiver.

In case that one data is comprised of seven binary parallel bits, the data may represent an integer value of "0" through "127". In such case, the transmitter outputs the data in the form of a two-phase pulse train containing a corresponding number of pulse edges from 0 to 127. For example, as shown in Fig. 2, if the original data is 18H, its binary parallel bits indicate an integer "24" so that the produced two-phase pulse train contains 24 number of pulse edges. The two-phase pulse train is comprised of two phase components XA and XB. The phase relation between the two components is determined according to a code applied to the data. For example, if the data is applied with the plus code, the phase component XA is advanced relative to the other phase component XB. On the other hand, if the data is applied with the minus code, the phase component XA is delayed relative to the other phase component XB. The term "pulse edge" indicates leading and trailing edges of a pulse contained in the two-phase pulse train, and a number of pulse edges is determined by counting all of the pulse edges contained in the two-phase pulse train. The counting circuit of the receiver, i.e., the mouse counter counts pulse edges one by one to accumulate calculated results in its register. The retrieving circuit of the receiver, e.g., CPU reads out a content of the mouse counter to obtain the data 18H fed from the transmitter. The CPU resets or clear the mouse counter after reading out the counted content.

If the CPU failed to timely retrieve the counted value from the mouse counter, the counter might cause overflow during the course of continuous feeding of the two-phase pulse trains. For example, if the transmitter transmitted a next data 5 after the transmitter had transmitted a previous data FF while the receiver failed to retrieve the content of the mouse counter, the mouse counter would cause an overflow such that its content were incorrectly set to the data 04. As understood from the above description, if an overflow occurred in the mouse counter, the data outputted from the transmitter could not be correctly received by the receiver. In view of this, the retrieving timing of the mouse counter in the receiver should be regulated according to the output timing of the two-phase pulse train in the transmitter. According to the inventive pulse count communication system, a specific data transfer mode is adopted as shown in Fig. 3 so as to avoid overflow of the mouse counter.

Referring to the Fig. 3 data transaction timing chart, the transmitter operates each given transfer period having an interval of 2.5 ms to output a two-phase pulse train (XA, XB) containing a certain number of pulse edges corresponding to an integer value represented by the data to be transferred. The receiver operates every sampling interval of, for example, 1 ms which is set smaller than the one transfer period for intermittently retrieving the content of the mouse counter. Namely, the mouse counter is read out and reset successively during the course of the outputting of the two-phase pulse train so as to avoid overflow of the mouse counter as well as to recognize an output stop state of the two-phase pulse train to thereby separate a sequence of multiple data from each other. In the Fig. 3 timing chart, two data indicative of integer values "40" and "35" are sequentially transferred from the transmitter to the receiver. When the transmitter starts to output a two-phase pulse train containing 40 number of pulse edges so as to transfer the first data, the CPU of the receiver operates at the timing a to read out the mouse counter. At this timing a, the CPU retrieves a fragmental content "15" indicative of an intermediate number of the pulse edges already outputted by that timing a. The mouse counter is reset at that timing a, while it continues to count pulse edges. At the next timing b, the mouse counter is again read out or sampled to retrieve another fragmental content of "25" which represents the remaining number of the outputted pulse edges. The receiver operates to sum up the calculated contents retrieved twice to determine the total number of the pulse edges received within the one transfer period. At a subsequent timing c, the CPU of the receiver effects again reading of the mouse counter in the same manner. However, since the output of the pulse train has been finished and the mouse counter was reset at the previous sample timing b, the last retrieved content is null. The receiver recognizes that the first data transfer has been finished when retrieving the last null content from the mouse counter, and it determines that the summed value of "15 + 25 = 40" is a decimal integer representation of the transferred data.

Subsequently in a second transfer period, there is outputted another pulse train containing a certain number of pulse edges corresponding to the integer value "35" represented by the second data to be transferred. In this second period, the receiver carries out successively the reading of the mouse counter content at sampling timings d, e and f to thereby count and determine the transmitted pulse edge number in the same manner.

Next, the description is given for a data transaction mode effective to transfer a packet of four data at one transaction processing with using the continuous data transfer system described in conjunction with Fig. 3. In this mode, the pair of X and Y counters which constitute the mouse counter are used to concurrently transfer a pari of data. By the one transaction processing , a first pair of data are transferred within a first transfer period, and a second pair of data are then transferred within a second transfer period, thereby effecting transaction of a packet of four data.

Since the four data are treated in the one transaction processing, the receiver has to separately recognize individual data. Namely, the receiver has to determine whether a pair of X and Y data are transmitted during the first period or the second period. The data is applied with a plus or minus code in order to discriminate between the first and second periods. Namely, the plus and minus codes are alternately applied to the X data of the concurrently transferred X and Y data pair each transfer period. The selective application of the plus and minus codes is effected by switching the phase condition of the corresponding two-phase pulse train. By this, the receiver detects the phase condition to judge whether the admitted data is coded plus or minus. If plus, the admitted data pair is of the first period. On the other hand, if minus, the admitted data is of the second period, thereby discriminating four individual data from each other.

In order to ensure the above noted discrimination, the X data must be coded minus once in the one transaction processing. If the X data has a zero value incidentally when the minus code is to be applied to that data, the receiver cannot recognize whether that data is the first one or the second one. In view of this, when a zero data is outputted incidentally at a timing of the minus coding, the transmitter outputs that zero data in the form of an negative integer "-128". The receiver operates when the data is admitted in the form of "-128" to recognize that the admitted data actually represents a zero value. By the above noted communication mode, a packet of the four data can be communicated at one transaction processing.

Further, there may be proposed another transfer mode as shown in Fig. 4 in order to improve reliability of the data detection and recognition in the receiver. Namely, the transmitter operates at the first transfer period to apply a plus code to the X data and to apply a minus code to the Y data for the first data pair. In turn, the transmitter operates at the second transfer period to apply reversely a minus code to the X data and to apply a plus code to the Y data. On the other hand, the receiver recognizes that the four admitted data are normal and complete when the precedingly admitted X data is positive and the corresponding Y data is negative and when the succeedingly admitted X data is negative and the corresponding Y data is positive. The receiver judges if otherwise that the four admitted data are erroneous. By such operation, the transferred packet of four data can be regularly checked as to their completeness.

The inventive communication system is not limited to the above described case where a packet of four data is transferred by one transaction processing, but also the inventive system may be applied to another case where a packet of eight data can be transferred by one transaction processing as indicated by the following TABLE 1.

TABLE 1

| X DATA | + 0 − 0 + 0 − 0 + 0 − | _ _ _ |
|--------|------------------------|-------|
| Y DATA | − 0 + 0 + 0 + 0 − 0 +  |       |

In the above example, a pair of X and Y pulse circuits are utilized to successively transmit a pair of X and Y data. The plus or minus code is alternately switched every other transfer period with respect to the X data so as to discriminate adjacent data pairs from each other. On the other hand, the first or top Y data of one transaction packet is applied with a negative code and the remaining or subsequent Y data in the same data packet are applied with the positive code. The receiver recognizes that a particular Y data is top one in one packet when that Y data is coded negative. By such manner, the transmitter and the receiver cooperate in synchronization with each other to transfer a multiple of data. In addition, check sum operation or CRC operation may be effected for the last end data in one data packet so as to check the reliability of the transferred data.

Hereinafter, the detailed description is given for one embodiment of the inventive pulse count mode data communication system with reference to Figs. 5 - 9. Fig. 5 is a structural diagram of a hardware provided in the receiver. This hardware is comprised of a pair of X pulse circuit 15 and Y pulse circuit 16 which correspond, respectively, to a pair of X mouse counter and Y mouse counter provided in the receiver, and a timing circuit 17 for regulatively timing a transmission of a pulse train. The X and Y pulse circuits 15 and 16 have the same construction, and they output an X pulse train (XA, XB) and a Y pulse train (YA, YB), respectively.

As shown in the figure, the X pulse circuit 15 is comprised of a pulse train generating circuit 18 operative according to a numerical value represented by an 8-bit parallel data fed through a data bus DB to generate a corresponding primary pulse train, and a phase circuit 19 operative based on the primary pulse train to produce an X two-phase pulse train (XA, XB). The pulse train generating circuit 18 includes an 8-bit latching circuit 20 for successively latching a data fed from the data bus DB, and an 8-bit binary counter 21 for counting up a clock pulse signal CK according to a binarily represented numerical value of the latched data. A definite number of the counted clock pulses are fed in the form of a primary or basic pulse train to the phase circuit 19 through a NAND circuit 28. The phase circuit 19 includes a pair of D-flipflop circuits 22, 23 operative according to a positive or negative sign of the latched data held in the latching circuit 20 for producing an X two-phase pulse train (XA, XB) having a relative advancing or delaying phase condition.

Fig. 6 is a timing chart illustrative of the operation of the Fig. 5 circuit. In this embodiment, the clock pulse signal CK has a 2 $\mu$ s of period effective to set an arrangement interval between adjacent pulse edges contained in the two-phase pulse train (XA, XB). Therefore, the two-phase pulse train composed of a pair of phase components XA and XB has a composite period of 8 $\mu$ s. The output timing of the two-phase pulse train (XA, XB) is regulated by timing signals T1 and T2. The timing signal T2 is effective to determine an output timing of a packet of four data in one transaction processing, and is set to T2 = 5ms in this embodiment. In this case, the data transaction rate is accordingly set to 200 packet/sec.

A CPU of the transmitter is interrupted temporarily by an interruption signal INT at a trailing timing a of the signal T1 so that the CPU checks through its CPU port a logic level of the other timing signal T2. When the signal T2 is held in an L level, a first data is latched into the 8-bit latching circuit 20. On the other hand, when the signal T2 is turned to an H level, a second data is latched into the 8-bit latching circuit 20. Then, the latched data is loaded into the 8-bit binary counter 21 to preset the same. The counter 21 starts at a timing b when the signal T1 turns to the H level to count the clock pulses CK until the counted number of the clock pulses reaches a certain integer value preset in the counter 21. The counter 21 holds a signal CY at a timing c when the counting is finished. The phase circuit 19 is started to operate according to the clock pulse signal CK at a timing d during the course of the operation of the 8-bit binary counter 21 to generate the X two-phase pulse train (XA, XB). The other Y pulse circuit 16 has a similar structure as that of the X pulse circuit 15. However, the Y pulse circuit 16 is provided with an inverter 24 effective to invert the phase condition of Y two-phase pulse train (YA, YB) relative to the corresponding X two-phase pulse train.

Fig. 7 shows waveforms of the thus formed X two-phase pulse train and Y two-phase pulse train. In Fig. 7, the X pulse train corresponds to an integer value "13" of the given X data, and the Y pulse train corresponds to another integer value "-7" of the given Y data.

Next, Fig. 8 shows a hardware construction of the receiver. The receiver such as a host computer is provided with a mouse interface. The mouse interface includes a mouse counter 25 and a port 26. The mouse counter 25 includes an X counter for counting the X two-phase pulse train (XA, XB) and a Y counter for counting the Y two-phase pulse train (YA, YB). The port 26 is disposed to admit switching signals S1 and S2, which are normally outputted from a bus mouse. Therefore, the port 26 is not used in the inventive communication system. However, it might be possible to control a retrieval timing of transferred data with using these switching signals S1 and S2. The applicants has already disclosed such data communication system utilizing the port 26 in Japanese Patent Application No. 181483/1989. However, the port 26 is regularly provided with a delay circuit for preventing chattering of the switching signals S1 and S2 to thereby hinder fast transfer of data. Aside from above, the host computer of the receiver further includes a CPU 27 for retrieving a counted value of the mouse counter 25.

Fig. 9 is a flow chart showing retrieval process of the mouse counter, conducted by the host computer in the receiver. In this embodiment, a set of four data is transferred as one data packet in first and second periods. Namely, the first pair of X and Y data and the second pair of X and Y data are sequentially admitted as one complete data packet. When the first data pair is admitted, the CPU 27 reads out the X counter. If the X data is positive, the CPU 27 carries out summation of the fragmentally counted contents of the X counter until a last counted content turns to null. On the other hand, if the X data is negative, the step is jumped to an error processing. The CPU 27 also reads out intermittently a content of the Y counter. If the Y data is negative, the CPU 27 carries out summation of the intermittently retrieved contents of the Y counter until a last content of the Y counter turns to zero. On the other hand, if the Y data is positive, the step is jumped to an error processing. When both of the X counter content and the Y counter content are lastly nulled, the CPU 27 judges that the first data transfer has been completed to thereby proceed to receiving process of the second data pair.

When the second data pair is admitted, the X counter is intermittently read out. If the X data is negative, the summation of the contents is carried out until a last content indicates zero. Otherwise, if the X data is positive, the step is jumped to an error processing. The Y counter is also checked intermittently. If the Y data is positive, the summation of the Y counter contents is carried out until a last content turns to zero. Otherwise, if the Y data is negative, the step is jumped to an error processing. When both of the X counter content and Y counter content turn to zero, the judgement is made that the transfer of the second data pair has been finished from the transmitter, thereby confirming completeness of the transferred packet of four data. Then, the retrieval processing returns to an initial admission step of a next first data pair.

Next, the description is given for the data transaction rate of the inventive pulse count mode communication system in case that a packet of four data is transferred at one transaction processing. The transaction rate is determined according to output timings of the pulse train in the transmitter and retrieval timings of the mouse counter in the receiver. Provided that the receiver has an internal timer to set an internal time interval of 2 ms, one data packet of four data can be transferred during a transaction period of $5 \times 2 = 10$ ms. Thus, the transaction rate is 100 packets/sec. The shorter the pitch of the pulse train outputted from the transmitter and the shorter the sample timing of the mouse counter in the receiver, the faster the transaction rate. Preferably, either of the pitch of the pulse train and sampling interval may be variably set to realize a desired transaction rate. The following TABLE 2 shows the relation between the internal timer rate in the receiver and the transaction rate.

TABLE 2

| Data transaction rate (pps) | Transfer period (ms) | Retrieving interval(ms) |
|---|---|---|
| | Transmitter | Receiver |
| 1 0 0 | 5 | 2 |
| 2 0 0 | 2 . 5 | 1 |

Lastly, the description is given below for an example of data packet format transferred according to the inventive data communication system. Here is exemplified that a digital data packet indicative of a coordinate point inputted by a digitizer is transferred to a host computer. The digital data packet is comprised of two or more of bytes, depending on a size of the digitizer. For example, the following TABLE 3 shows a bit and byte format of a digital data packet comprised of first through fourth bytes each containing eight parallel bits.

TABLE 3

|   | 7 | 6 | 5 | 4 | 3 | 2 | 1 | 0 |
|---|---|---|---|---|---|---|---|---|
| 1 | — | RDY | S 5 | S 4 | S 3 | S 2 | S 1 | S 0 |
| 2 | — | Y 9 | Y 8 | Y 7 | X 10 | X 9 | X 8 | X 7 |
| 3 | — | X 6 | X 5 | X 4 | X 3 | X 2 | X 1 | X 0 |
| 4 | — | Y 6 | Y 5 | Y 4 | Y 3 | Y 2 | Y 1 | Y 0 |

In the TABLE 3, the left column numerals 1 - 4 denote the first through fourth bytes, respectively, and the top row numerals 7 - 0 denote an eight-bit arrangement in each of the bytes. In this example, the most significant bit position is vacant in each byte. Accordingly, the information of one coordinate point is represented by multiple bit arrangement of $4 \times 7 = 28$. This 28-bit arrangement is divided into the first through fourth bytes. The bits X0 through X10 denote an X coordinate value taking an integer value of 0 through 2047. The bits Y0 through Y9 denote a Y coordinate value taking an integer value of 0 through 1023. Further, the bits S0 through S5 represent a switching signal related to a kind of input tool used to designate a coordinate point and to gradation information of the designated point. The bit RDY indicates whether a coordinate designating tool exists within an effective area of the planar sensor.

In the above described embodiment, the coordinate data inputted from the digitizer is transferred to the host computer. Generally, the inventive pulse count mode communication system can be applied to data transfer between various types of input terminal devices and measurement devices, and the host computer. Therefore, the technical scope of the present invention should not be limited to data transfer from the digitizer.

In the above described embodiment, the absolute coordinate data of the digitizer is transferred by means of the inventive pulse count mode communication system. However, the present invention is not limited to this embodiment, but the invention may be applied to transaction of a relative coordinate data in similar manner. Referring to Fig. 15, the description is given for a principle of processing of a displacement amount of a coordinate designating tool, with data transfer from the digitizer to the host computer by means of the aforementioned hardware construction with using a two-phase pulse train. In the present embodiment, the transmitter transmits a pair of relative X and Y coordinate data every given transfer period having an interval of, for example, 10 ms, while the receiver retrieves the pair of X and Y data every given retrieval period having another interval of, for example, 8 ms set smaller than the transfer interval. Any receiving misoperation such as overflow of the mouse counter can be avoided by such settings of communication timings.

Aside from above, a bus mouse device produces a two-phase pulse train as shown in Fig. 14. In detail, as illustrated in Fig. 13, the bus mouse device generates a two-phase pulse train having a variable pulse width determined according to rotation speed of a sensor coupled to a rotary shaft. Therefore, the pulse width varies during the course of the bus mouse movement. The pulse train is not interrupted as long as the bus mouse is moving. On the other hand, according to the present invention, the receiver, i.e., the host computer is provided with a mouse counter operative to only count pulse edges without regard to the fact that the pulse train is continuous or interrupted, or the pulse width varies or not until the CPU effects the retrieval of the counted value of the mouse counter. Therefore, it is not necessary to form a two-phase pulse train to be transfer by the inventive system, identically to that produced by the typical bus mouse. Accordingly, there can be utilized the pulse circuit provided in the transmitter of the inventive system for transferring a relative displacement data from the digitizer such that the two-phase pulse train is intermittently outputted every transfer period of 10 ms as shown in Fig. 15. In turn, the host computer effects the retrieval every period of 8 ms to avoid overflow of the mouse counter. By such timings, the relative displacement data can be transferred from a coordinate input device such as digitizer to the host computer.

In practical use of the digitizer, it is desired to selectively transfer to the host computer either of the absolute coordinate data and the relative coordinate data or relative displacement data. Thus, there will be described hereinbelow a modified communication system effective to select either of the absolute coordinate data and the relative coordinate data so as to transfer the selected data to the bus mouse interface provided in the host computer by means of a common hardware. Fig. 16 is a hardware construction diagram of a transmitter operative to switch between the absolute coordinate data and the relative coordinate data to be transferred. This hardware is comprised of a pair of X pulse circuit 15 and Y pulse circuit 16 corresponding, respectively, to a pair of X counter and Y counter provided in the receiver, and a timing circuit 17 for controlling a transfer timing of a pulse train. The X pulse circuit 15 and Y pulse circuit 16 have the same construction for outputting an X two-phase pulse train (XA, XB) and a Y two-phase pulse train (YA, YB).

As shown in the figure, the X pulse circuit 15 is comprised of a pulse generating circuit 18 operative based on a set of an 8-bit coordinate data and 1-bit code data fed from a 16-bit data bus DB connected to a CPU (not shown) of the digitizer for generating a primary pulse train according to a numerical value represented by the fed data, and a phase circuit 19 operative based on the primary pulse train to generate an X two-phase pulse train (XA and XB). The pulse generating circuit 18 is comprised of a 9-bit latching circuit 201 for sequentially latching a data from the data bus DB, and an 8-bit binary counter 21 operative according to an integer numerical value determined by the binary representation of the lower eight bits of the latched 9-bit data kept in the latching circuit 20 for counting up a clock pulse signal CK. Accordingly, the primary pulse train containing the counted number of the clock pulses is fed to the phase circuit 19 through a NAND circuit 28. The phase circuit 19 is provided with a pair of D-flipflop circuits 22, 23 operative according to a plus or minus code indicated by the highest order bit T2 of the latched 9-bit parallel data for producing a two-phase pulse train (XA, XB) of relative advancing or delaying phase condition and being representative of the lower eight bits.

In the construction of the transmitter shown in Fig. 16, the pulse generating circuit 18 is composed of a hardware comprised of multiple components. However, the present invention is not limited to such construction, but one chip CPU can be used to form a counter for generating a pulse train. Fig. 17 is a timing chart illustrative of the operation of such pulse generating means. As shown in the figure, the pulse generating means is comprised of a one-shot counter operative to produce a one-shot pulse having a duration determined according to a value of the coordinate data to be transferred. During this duration, a clock pulse signal CK having a period of 2 $\mu$ s passes through a gate circuit to the phase circuit. The phase circuit outputs a two-phase pulse train (XA, XB) having a definite number of pulse edges corresponding to the number of the inputted clock pulses. Such construction can simplify circuit structure of the transmitter.

Lastly, referring to Fig. 18, the description is given for the transfer of relative displacement data. When the digitizer CPU selects the transfer of a relative displacement data, the pulse circuit of Fig. 16 operates according to the predetermined algorithm to generate a pair of two-phase pulse trains indicative of a relative displacement data in manner similar to a typical bus mouse device.

With regard to the transfer of the absolute coordinate data, the CPU of the digitizer is temporarily interrupted by a trailing edge of the signal T1 so that the CPU writes the data into the pulse circuit. However with regard to the transfer of the relative coordinate data, the data is loaded into the pulse circuit according to a clock of an internal timer in the digitizer. Namely, as shown in Fig. 18, firstly the digitizer and the bus mouse interface are initialized to switch the digitizer operation program to the relative coordinate data transfer mode. Next, a pair of relative displacements dX and dY are calculated every given period of 10 ms based on the detection results of successive absolute coordinate points in the digitizer, and the calculated data pair of dX and dY are loaded into the respective X and Y pulse generating circuits. As opposed to the transfer of the absolute coordinate data, the pair of relative displacement data dX and dY in a range of +127 through -128 are concurrently written into the pair of X and Y pulse generating circuits, respectively, without employing a specific procedure. If the relative displacement data is positive, the highest order bit is set to L level in the 9-bit latching circuit 201 shown in Fig. 16 and the lower order 8-bits are set with the value of the relative displacement dX or dY. Otherwise if the relative displacement data is negative, the highest order bit is set to H level in the 9-bit latching circuit 201 and the lower order 8 bits are set with the value of the relative displacement dX or dY. Although the switching signals S1 and S2 related to a bus mouse device are not used in the absolute coordinate data transfer, in the relative coordinate data transfer the switching signals S1 and S2 are outputted to designate a switch condition of the coordinate input tool so as to enable the same to simulate a typical bus mouse device. With using this two-phase pulse generating circuit, the CPU of the digitizer can be efficiently operated to simply set a relative displacement data at a desired time interval. The transmitted data is retrieved each retrieval interval of, for example, 8 ms which is set shorter than the transfer period of, for example, 10 ms.

INDUSTRIAL APPLICABILITY

As described above, the inventive pulse count mode communication system can be applied to transfer of a coordinate data inputted by a coordinate input device such as a digitizer to a host computer in which the transferred data is to be processed. Further, the inventive system can be generally applied to a parallel bit data transfer between a host computer and various types of peripheral input terminal devices and measurement devices.

## Claims

1. A communication system for transfering a data composed of binary parallel bits from a transmitter to a receiver, wherein the transmitter comprises a pulse circuit operative each given transfer period for outputting a two-phase pulse train containing a certain number of pulse edges corresponding to an integer number represented by binary parallel bits which constitute a data to be transferred, and the receiver comprises a resettable counting circuit for counting pulse edges contained in the transferred two-phase pulse train, and a retrieving circuit operative intermittently every given retrieving interval within one transfer period for retrieving sequentially each counted content from the counting circuit and repeatedly resetting the same, and being operative when a last counted content turns to null for summing up all of the sequentially retrieved counted contents to thereby determine a received number of the pulse edges representative of the transferred data.

2. A communication system according to claim 1, wherein the transmitter includes a coding circuit for applying to a sequence of plural data either of a plus code and a minus code effective to discriminate the plural data from each other, and the pulse circuit operates to switch a phase condition of the two-phase pulse train according to the code applied to the corresponding data, and wherein the receiver operates to discriminate from each other the time-sequentially transferred plural data according to the phase condition of each two-phase pulse train.

3. A communication system according to claim 2, wherein the coding circuit operates to apply the plus code and the minus code alternately to the sequence of the plural data.

4. A communication system according to claim 2, wherein the coding circuit operates to apply one code to a top data in the sequence and to apply the other code to subsequent data in the sequence.

5. A communication system according to claim 1, wherein the transmitter includes a pair of pulse circuits for concurrently transmitting a pair of data, and the receiver includes a corresponding pair of counting circuits for concurrently receiving a pair of data.

6. A communication system according to claim 5, wherein the pair of pulse circuits operate to transmit a pair of data in a first transfer period and to transmit another pair of data in a second transfer period to thereby effect transaction of one data packet containing four data.

7. A communication system according to claim 1, wherein the counting circuit and the retrieving circuit constitute together a bus mouse interface in the receiver.

8. A communication system according to claim 1, wherein the transmitter includes a coordinate input device operative to designate a coordinate data to be transferred.

9. A communication system according to claim 1, wherein the transmitter includes a coordinate input device operative to produce either of an absolute coordinate data and a relative coordinate data, and selecting means for selecting either of the absolute coordinate data and the relative coordinate data to be transferred.

10. A communication system according to claim 9, wherein the retrieving circuit of the receiver operates each given retrieving period set no greater than the transfer period for detecting a selected relative coordinate data transferred from the transmitter every transfer period.

11. A communication system according to claim 9, wherein the transmitter operates to calculate a relative coordinate data based on the absolute coordinate data directly obtained by the coordinate input device, and wherein the coding circuit operates to apply either of a plus code and a minus code to the calculated relative coordinate data and the pulse circuit operates according to the coded relative

EP 0 457 922 A1

coordinate data for producing a two-phase pulse train having a certain phase condition according to the applied code so as to simulate a typical bus mouse device.

FIG. 1

data : ÷ 18 H (24)          pulse edge

XA

XB

1        5        10        15        20        24

pulse edge

FIG. 2

2.5 ms                          2.5 ms

transmitter
output timing    1 ms     1 ms     1 ms     1 ms     1 ms     1 ms

XA               40                         35
receiver
retrieving ti-
ming XB          40                         35

a         b         c         d         e         f

a ÷ b                    d ÷ e

counted content   0      counted content   0

FIG. 3

X data   $+$   $O$   $-$   $O$

Y data   $-$   $O$   $+$   $O$

FIG. 4

FIG 5

FIG. 6

EP 0 457 922 A1

FIG. 7

FIG. 8

```
              retrieving process of
              mouse counter

          N        if
                 first per

          X counter reading

                    N
                 +

          X contents summing

          Y counter reading

                    N
                 -

                          Y
             X , Y = O

          Y contents summing        preparing for recpt
                                     of second data

          X counter reading.

                    N
                 -

          X contents summing

          Y counter reading

                    N
                 +

          Y
             X , Y = O
 completing receipt
 of one data packet,    Y contends summing      error processing,
 preparing for recpt.                           preparing for recpt.
 of first data                                  of first data

                    end
```

FIG. 9

FIG. 10

FIG. 11

FIG. 12

FIG. 13

XA $\begin{smallmatrix} OFF \\ ON \end{smallmatrix}$

XB $\begin{smallmatrix} OFF \\ ON \end{smallmatrix}$

moving in positive direction

XA $\begin{smallmatrix} OFF \\ ON \end{smallmatrix}$

XB $\begin{smallmatrix} OFF \\ ON \end{smallmatrix}$

moving in negative direction

FIG. 14

FIG. 15

FIG. 16

One-shot counter start

2 μ S clock start                    2 μ S

2 μ S· signal CK

one-shot signal

|——8uS——|

XA

XB

FIG. 17

```
┌─────────────────────────────┐
│ initializing digitizer and  │
│ interface                   │
└─────────────────────────────┘
              │
              ▼
     ┌─────────────────────────┐
     │ calculating absolute co-│
     │ ordinate value in digitizer│
     └─────────────────────────┘
              │
              ▼
         ╱─────────────╲
    N   ╱ If 10 ms timer ╲
  ◄────╲    ready        ╱
         ╲─────────────╱
              │ Y
              ▼
   ┌─────────────────────────┐
   │ calculating relative dis-│
   │ placement amount         │
   │ dX = X - Xold            │
   │ dY = Y - Yold            │
   └─────────────────────────┘
              │
              ▼
   ┌─────────────────────────┐
   │      Xold = X           │
   │      Yold = Y           │
   └─────────────────────────┘
              │
              ▼
   ┌─────────────────────────┐
   │ producing pulse trains indi-│
   │ cative of data dX and dY │
   └─────────────────────────┘
              │
              ▼
   ┌─────────────────────────┐
   │ setting switches S1 and  │
   │ S2                       │
   └─────────────────────────┘
```

dX, dX    +      27  -   28

FIG. 18

# INTERNATIONAL SEARCH REPORT

International Application No PCT/JP90/01613

**I. CLASSIFICATION OF SUBJECT MATTER** (if several classification symbols apply, indicate all) ⁶

According to International Patent Classification (IPC) or to both National Classification and IPC

Int. Cl⁵  G06F3/033, G06K11/18

**II. FIELDS SEARCHED**

| Minimum Documentation Searched ⁷ | |
|---|---|
| Classification System | Classification Symbols |
| IPC | G06F3/03-3/033, G06K11/06-11/20 |

Documentation Searched other than Minimum Documentation
to the Extent that such Documents are included in the Fields Searched ⁸

| | |
|---|---|
| Jitsuyo Shinan Koho | 1970 – 1990 |
| Kokai Jitsuyo Shinan Koho | 1971 – 1990 |

**III. DOCUMENTS CONSIDERED TO BE RELEVANT ⁹**

| Category * | Citation of Document, ¹¹ with indication, where appropriate, of the relevant passages ¹² | Relevant to Claim No. ¹³ |
|---|---|---|
| Y | JP, A, 61-34622 (NEC Corp.), February 18, 1986 (18. 02. 86) & US, A, 4739303 | 1-11 |
| Y | JP, A, 60-153538 (Sharp Corp.), August 13, 1985 (13. 08. 85), Upper left column, page 4 (Family: none) | 1-11 |

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| February 15, 1991 (15. 02. 91) | March 4, 1991 (04. 03. 91) |
| International Searching Authority | Signature of Authorized Officer |
| Japanese Patent Office | |

Form PCT/ISA/210 (second sheet) (January 1985)